# Europäisches Patentamt

# European Patent Office

# Office européen des brevets

(11) Veröffentlichungsnummer: **0 078 392**
**B1**

# EUROPÄISCHE PATENTSCHRIFT

(45) Veröffentlichungstag der Patentschrift:
22.07.87

(51) Int. Cl.⁴: **B 60 B 39/10,** B 61 H 13/00

(21) Anmeldenummer: **82108588.3**

(22) Anmeldetag: **17.09.82**

(54) Strassenfahrzeug mit Splitstreuer und Antiblockier-System.

(30) Priorität: **31.10.81 DE 3143311**

(43) Veröffentlichungstag der Anmeldung:
**11.05.83 Patentblatt 83/19**

(45) Bekanntmachung des Hinweises auf die Patenterteilung:
**22.07.87 Patentblatt 87/30**

(84) Benannte Vertragsstaaten:
**AT CH DE LI SE**

(56) Entgegenhaltungen:
**DE-A-2 938 583**
**FR-A-2 351 830**
**FR-A-2 354 905**
**GB-A-1 528 208**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Reinecke, Erich, Kastanieneck 6, D-3167 Burgdorf (DE)**
Erfinder: **Pohl, Wolfgang, Im Stühe 56, D-3008 Garbsen 6 (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

LIBER, STOCKHOLM 1987

## Beschreibung

Die Erfindung bezieht sich auf ein Straßenfahrzeug mit Splitstreuer und Antiblockier-System gemäß dem Oberbegriff des Patentanspruchs 1 (siehe DE-A-29 38 583).

Nach der Statistik ist ein zunehmender Teil der Straßenverkehrsunfälle auf "Straßenglätte" zurückzuführen, nämlich auf Winterglätte durch Eis und Schnee und ferner auf Wasserglätte. Mit der Verkehrsdichte nimmt der hierdurch entstehende Gesamtschaden noch zu.

Die Beiwerte der Haft- und Gleitreibung sind bei Glätte wesentlich kleiner, als auf trockener Fahrbahn und die Bremswege daher länger.

Gegen Winterglätte treffen alle Straßenverwaltungen Maßnahmen nach einheitlichen Richtlinien. Sie räumen und streuen die Straße planmäßig, sind aber nicht in der Lage, jederzeit für ausreichend griffige Straßen zu sorgen. Gegen Glatteis sind Straßenmaßnahmen kaum rechtzeitig zu treffen, da es meist begrenzt und so plötzlich auftritt, daß es die Fahrer überrascht. Das gleiche gilt auch für die Wasserglätte infolge plötzlicher Niederschläge.

Seit einigen Jahren wird gegen Winterglätte auf den Fernstraßen statt Sand oder Split fast nur noch Tausalz gestreut, um die Glätte möglichst bald ganz zu beseitigen. Salz und das Tauwasser vergrößern aber die Glätte so lange, bis das Reifenprofil die Eisspur zermürben und die Fahrbahn greifen kann. Außerdem kann Regen die Auftauwirkung des Salzes aufheben und anschließend gefrieren. Auch nach Neuschnee muß wieder Salz gestreut werden. Ein weiterer bekannter Nachteil von Streusalz ist die hierdurch bewirkte Schädigung der Umwelt.

Sand oder Split beseitigen Straßenglätte dagegen sofort, da ihn die Reifen in die festgefahrene Spur genügend ein- und festdrücken können. Daher wird er immer noch, vor allem in Städten mit dichtem Verkehr, bei Schneeglätte in Steigungen gestreut, weil er Gleiten und Schleudern sofort behebt und die Spur noch lange griffig erhält. Gegen Eisglätte wirkt er aber nur wenig, weil er sich auf ihr nicht genügend eindrücken läßt und festsetzen kann.

Es sind bereits direkt am Fahrzeug, meist an Nutzfahrzeugen angebrachte Splitstreuer bekannt (DE-A-29 38 583). Diese können bei Bedarf durch den Fahrer, oder auch automatisch in Betrieb gesetzt werden. Der Vorrat an Split bzw. Sand beträgt pro Rad ca. 10 l.

Die Einschaltung des Splitstreuers durch den Fahrer kommt jedoch in Notsituationen in der Regel zu spät. Eine Einschaltung durch ein Antiblockiersystem bei beginnendem Schlupf bzw. beginnender Regelung kommt zwar rechtzeitig, hat jedoch den Nachteil eines zu hohen Sandverbrauchs. Es kommt nämlich, wie die Erfahrung gezeigt hat, auch in normalen Fahrsituationen, wie z. B. bei einer Teilbremsung auf glatter Straße vor einer Ampel, relativ häufig zum Ansprechen des Blockierschutzes. Ein Sandstreuen wäre jedoch hier unnötig. Ein Sandstreuen bei einer geregelten Bremsung auf hohem Reibwert, z. B. trockenem Beton, hat nicht nur den Nachteil eines unnötigen Sandverbrauchs, sondern würde auch den Reibwert verringern und damit den Bremsweg verlängern. Dieses Verhalten der bekannten, durch das Antiblockiersystem gesteuerten Splitstreuung ist daher aus Sicherheitsgründen abzulehnen.

Der Erfindung liegt daher die Aufgabe zugrunde, ein Straßenfahrzeug der eingangs genannten Art zu schaffen, bei dem die Einschaltung eines Splitstreuers nur in Notsituationen, und zwar bei Vollbremsungen auf niedrigem Reibwert in Aktion tritt und damit Split bzw. Sand gespart wird und bei Bremsungen auf hohem Reibwert der Bremsweg nicht verlängert wird.

Diese Aufgabe wird durch die im Patentanspruch 1 enthaltene Erfindung gelöst. Die Unteransprüche enthalten zweckmäßige Ausgestaltungen und Weiterbildungen der Erfindung.

Die Erfindung wird im folgenden anhand eines in einer Zeichnung dargestellten Ausführungsbeispieles näher erläutert.

Die Zeichnung zeigt in:

Fig. 1 ein Blockschaltbild eines mit einem Antiblockier-System und mit Splitstreuern ausgerüsteten Fahrzeugs, in

Fig. 2 ein Blockschaltbild einer Vorrichtung zum Einschalten des Splitstreuers, und in

Fig. 3 ein Diagramm der Bremsdrücke vor und hinter einem Regelventil des Antiblockier-Systems über der Zeit.

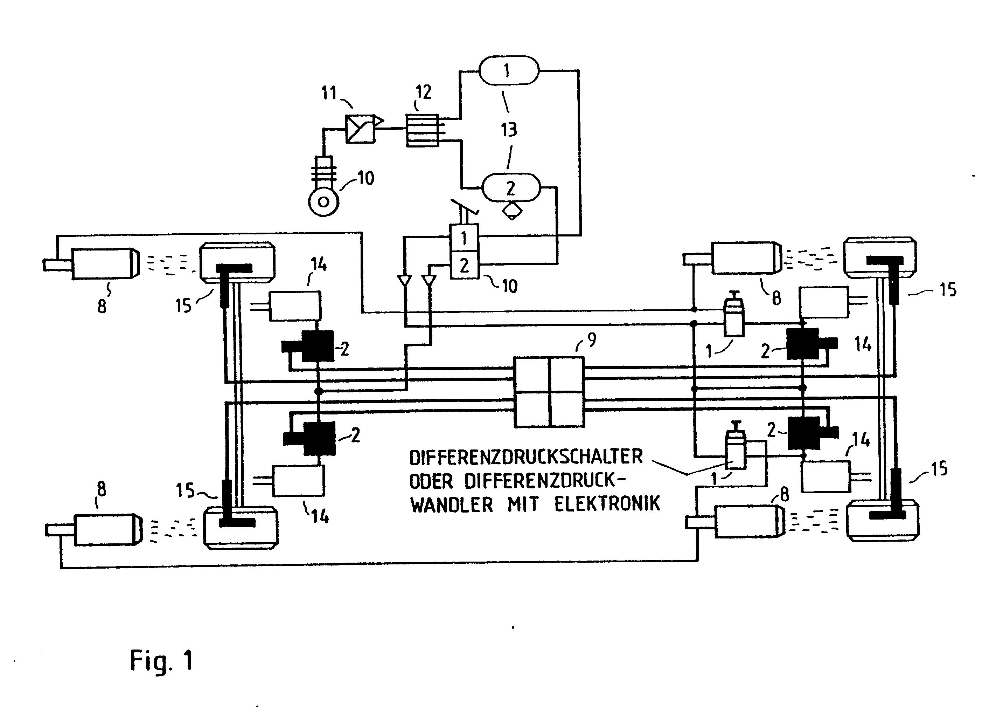

Das in Fig. 1 gezeigte Blockschaltbild zeigt ein Fahrzeug, welches mit einer pneumatischen Bremsanlage, mit Splitstreuern und mit einem Antiblockier-System versehen ist. Der pneumatische Teil der Bremsanlage besteht aus einem Luftkompressor 10, einem Druckregler 11, einem Mehrkreis-Schutzventil 12, zwei Vorratsbehältern 13, einem Trittplattenventil 10, Blockierschutz-Regelventilen 2 und Bremszylindern 14. Die Funktionsweise einer derartigen Bremsanlage ist bekannt und wird deshalb hier nicht weiter erläutert.

Die Bremsanlage enthält weiter ein Antiblockier-System 9, durch welches die Regelventile 2 zur Modulation des Bremsdruckes bei Straßenglätte angesteuert werden können. Dem Antiblockier-System 9 werden Informationen über das Drehverhalten der Räder mittels Radsensoren 15 zugeführt.

Es ist weiter vor jedem Rad ein Splitstreuer 8 angebracht. Dieser wird in Notsituationen mittels einer Auswerteschaltung, welche auf die Druckdifferenz der Drücke vor und hinter dem Regelventil 2 anspricht, eingeschaltet. Die Druckdifferenz wird durch eine Druckmeßeinrichtung 1, die als Differenzdruckwandler oder als Differenzdruckschalter ausgebildet sein kann, erfaßt.

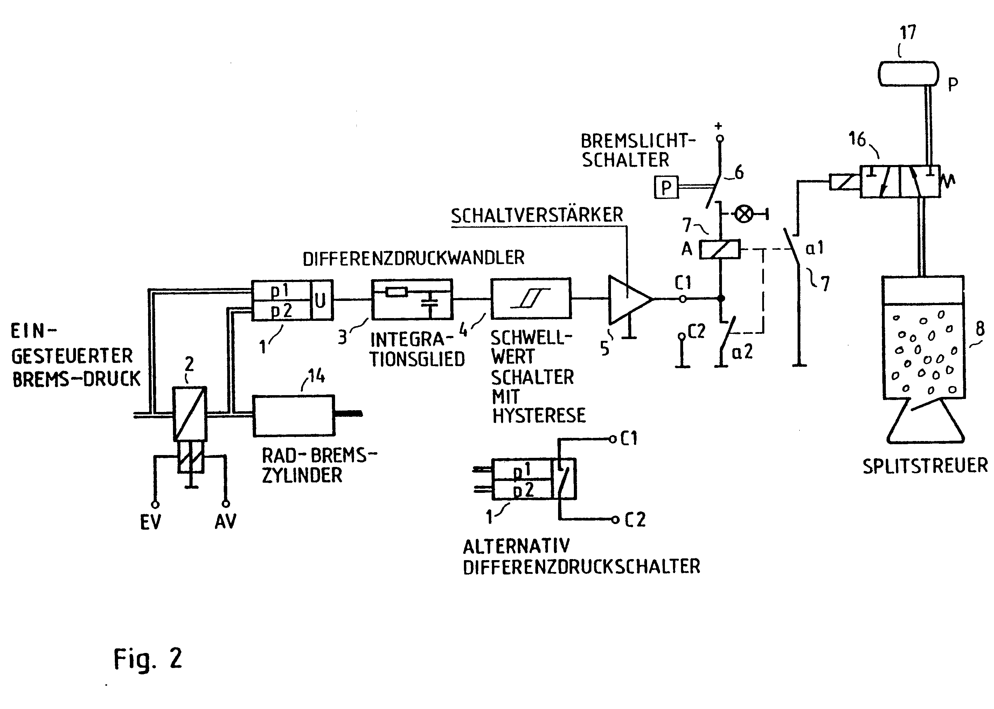

Wie aus Fig. 2 zu erkennen ist, erfaßt eine Druckmeßeinrichtung, die als Differenzdruckwandler oder alternativ als Differenzdruckschalter ausgebildet sein kann, die Drücke vor und hinter einem Regelventil 2. Die überwachten Regelventile können beispielsweise den Hinterrädern zugeordnet sein (Fig. 1).

Bei Verwendung eines Differenzdruckwandlers, welche eine der Druckdifferenz proportionale Spannung abgibt, ist diesem zum Ausgleich von hochfrequenten Druckschwankungen zunächst ein Integrationsglied 3 nachgeschaltet. Eine dem Differenzdruck proportionale Spannung wird anschließend auf einen Schwellwertschalter mit Hysterese gegeben. Dieser schaltet bei Erreichen eines vorbestimmten Wertes durch. Die Hysterese ist deshalb vorteilhaft, damit bei kurzzeitiger Unterbrechung der Regelung des Antiblockiersystems der Splitstreuer weiter eingeschaltet bleibt. Über einen Schaltverstärker 5 sowie ein Relais 7 wird schließlich ein Magnetventil 16 eingeschaltet, durch das ein Druckmittel aus einem Vorrat 17 auf den Splitstreuer 8 geleitet wird. Hierdurch wird der Split bzw. der Sand auf die Fahrbahn befördert. Anstelle eines Ausblasens können auch andere, z. B. mechanische Methoden zum Ausbringen des Sandes angewendet werden. Die Zwischenschaltung des durch einen Bremslichtschalter 6 einschaltbaren Relais 7 dient zusätzlich zur Sicherheit gegen unabsichtliches Betätigen des Splitstreuers.

Alternativ zum Differenzdruckwandler kann auch ein Differenzdruckschalter eingesetzt werden, welcher auf eine bestimmte Schaltschwelle eingestellt ist. Dieser kann dann direkt an den Punkten C1, C2 an die oben beschriebene Schaltung angeschaltet werden (Fig. 2). Vorteilhaft ist es, einen trägen Schalter zu verwenden, der schnellen Druckschwankungen des geregelten Druckes nicht folgt, sondern auf einen Mittelwert reagiert.

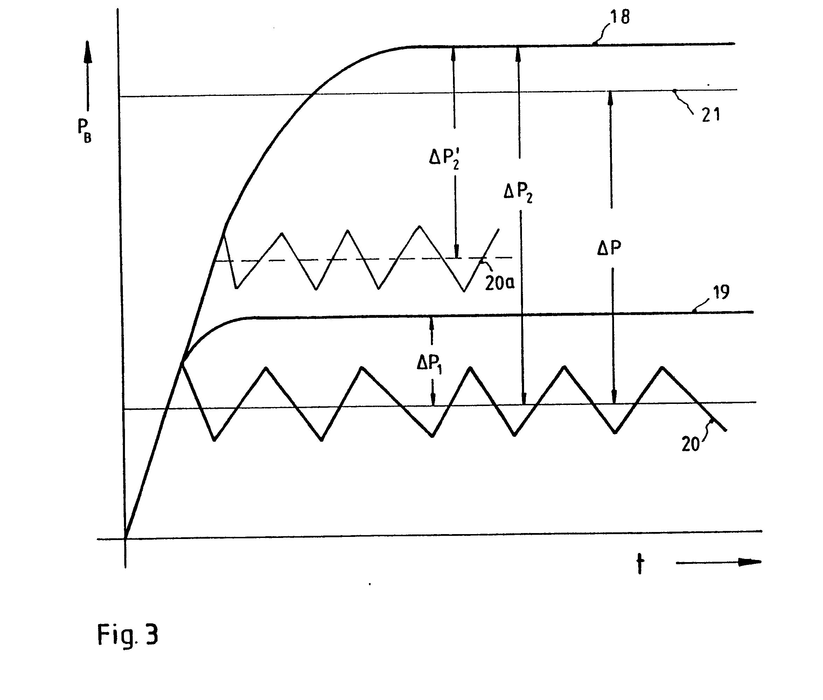

In Fig. 3 ist ein Diagramm dargestellt, welches den Bremsdruck $P_B$ über der Zeit t während verschiedener Bremsungen enthält. Dargestellt sind drei verschiedene Bremsfälle.

Bei einer unkritischen geregelten Bremsung, d.h. ohne Gefahren- oder Paniksituation, steigt der vom Bremsventil 10 eingesteuerte Bremswert vor dem Regelventil 2 auf einen der Kurve 19 entsprechenden Wert. Der geregelte Bremsdruck hinter dem Regelventil 2 wird durch die Kurve 20 dargestellt.

Dieser ist von der Straßenoberfläche abhängig. Der von der Druckmeßeinrichtung 1 festgestellte Differenzdruck, gemessen zwischen der Kurve 19 und einem Mittelwert der Kurve 20, beträgt in diesem Fall $\Delta P_1$. Diese Druckdifferenz ist jedoch nicht groß genug, um den Schwellwertschalter 4 bzw. den Differenzdruckschalter 1 zum Schalten zu bringen. Hierzu ist vielmehr eine Druckdifferenz in Höhe von $\Delta P$ zwischen einem voreingestellten Druck 21 und dem Mittelwert der geregelten Druckkurve 20 nötig. Der Splitstreuer 8 wird daher in diesem Fall nicht eingeschaltet.

Falls jedoch der Fahrer aufgrund einer Paniksituation bei einem auftauchenden Hindernis das Bremspedal weiter durchdrückt, beispielsweise bis zu einem der Kurve 18 entsprechenden Druckwert, ergibt sich ein Differenzdruck von $\Delta P_2$. Dieser überschreitet nunmehr die Schwelle $\Delta P$ und führt zum Einschalten des Splitstreuers 8.

Im dritten Fall erfolgt eine geregelte Bremsung auf hohem Reibwert. Der geregelte Bremsdruck wird hier durch die Kurve 20a dargestellt. Es ergibt sich eine Druckdifferenz von $\Delta P'_2$ zum eingesteuerten Bremsdruck 18. Da diese Druckdifferenz unter der Schwelle $\Delta P$ bleibt, wird der Splitstreuer 8 nicht betätigt.

**Patentansprüche**

1. Straßenfahrzeug mit Splitstreuer und Antiblockier-System, wobei der durch ein Bremsventil in die Bremszylinder der Räder eingesteuerte Bremsdruck über Regelventile modulierbar ist, <u>gekennzeichnet durch folgende Merkmale:</u>
a) es ist mindestens eine Druckmeßeinrichtung (1) vorgesehen, welche die Bremsdrücke vor und hinter einem Regelventil (2) erfaßt;
b) es ist eine Auswerteschaltung (3 - 7) vorgesehen, die beim Übersteigen einer vorbestimmten Differenz der Bremsdrücke vor und hinter dem Regelventil (2) den Splitstreuer (8) einschaltet.

2. Straßenfahrzeug nach Anspruch 1, <u>dadurch gekennzeichnet</u>, daß als Druckmeßeinrichtung (1) ein Differenzdruckwandler mit Auswerteschaltung oder ein Differenzdruckschalter vorgesehen ist.

3. Straßenfahrzeug nach Anspruch 2, <u>dadurch gekennzeichnet</u>, daß die Auswerteschaltung für den Differenzdruckwandler aus einem Integrationsglied (3), einem Schwellwertschalter mit Hysterese (4) und einem Schaltverstärker (5), besteht, und daß der Splitstreuer (8) durch ein Relais (7) einschaltbar ist.

**Claims**

1. Road vehicle having a grit spreader and an antilock system, wherein the braking pressure introduced through a brake valve into the brake cylinders of the wheels can be modulated by means of control valves, <u>characterised by the following features:</u>
a) at least one pressure measuring device (1) is provided which detects the braking pressures before and after a control valve (2);
b) an evaluation circuit (3 - 7) is provided which switches on the grit spreader (8) when a predetermined difference in the braking pressures before and after the control valve (2) is exceeded.

2. Road vehicle according to claim 1, characterised in that a differential pressure transducer having an evaluation circuit or a differential pressure switch is provided as the pressure measuring device (1).

3. Road vehicle according to claim 2, characterised in that the evaluation circuit for the differential pressure transducer comprises an integration part (3), a threshold value switch with hysteresis (4) and a switching amplifier (5), and that the grit spreader (8) can be switched on by a relay (7).

**Revendications**

1. Véhicule routier équipé d'un appareil à épandre du gravillon et d'un système antiblocage, par lequel la pression de freinage envoyée par un robinet de frein dans les cylindres de frein des roues est modulable par des soupapes de réglage, caractérisé en ce que:

a) le véhicule est équipé d'au moins un dispositif de mesure de pression (1) qui détecte les pressions de freinage en amont et en aval d'une soupape de réglage (2); et

b) le véhicule est équipé d'un circuit d'exploitation (3 - 7) qui enclenche l'appareil à épandre du gravillon lorsque la différence entre les pressions de freinage en amont et en aval de la soupape de réglage (2) dépasse une valeur prédéterminée.

2. Véhicule routier selon la revendication 1, caractérisé en ce que le dispositif de mesure de pression (1) est constitué d'un transducteur de pression différentielle avec un circuit d'exploitation ou d'un interrupteur de pression différentielle.

3. Véhicule routier selon la revendication 2, caractérisé en ce que le circuit d'exploitation pour le transducteur de pression différentielle est constitué d'un élément d'intégration (3), d'un interrupteur à valeur de seuil et à hystérésis (4) et d'un amplificateur de commutation (5), et que l'appareil à épandre du gravillon (8) peut être enclenché par un relais (7).

DIFFERENZDRUCKSCHALTER
ODER DIFFERENZDRUCK-
WANDLER MIT ELEKTRONIK

Fig. 1

0078 392

BREMSLICHT-
SCHALTER

SCHALTVERSTÄRKER

DIFFERENZDRUCKWANDLER

EIN-
GESTEUERTER
BREMS-DRUCK

RAD-BREMS-
ZYLINDER

INTEGRA-
TIONSGLIED

SCHWELL-
WERT
SCHALTER
MIT
HYSTERESE

ALTERNATIV
DIFFERENZDRUCKSCHALTER

SPLITSTREUER

0078392

Fig. 2

Fig. 3